# EUROPEAN PATENT SPECIFICATION

(11) **EP 2 009 033 B1**
(45) Date of publication and mention of the grant of the patent: **16.01.2013**
(21) Application number: 07740322.8
(22) Date of filing: 29.03.2007
(51) Int. Cl.: C08F 220/22, C08F 220/32

(54) **HOLLOW POLYMER PARTICLES AND COLORED HOLLOW POLYMER PARTICLES**
POLYMERHOHLTEILCHEN UND GEFÄRBTE POLYMERHOHLTEILCHEN
PARTICULES DE POLYMÈRE CREUSES ET PARTICULES DE POLYMÈRE CREUSES ET COLORÉES

(30) Priority: 29.03.2006 JP 2006090764
(43) Date of publication of application: 31.12.2008
(73) Proprietor: KAWAMURA INSTITUTE OF CHEMICAL RESEARCH, Sakura-shi Chiba 285-0078 (JP); DIC Corporation, Tokyo 174-8520 (JP)
(72) Inventor: FUKAZAWA, Norimasa, Sakura-shi, Chiba 285-0078 (JP); JIN, Ren-Hua, Sakura-shi, Chiba 285-0078 (JP)
(74) Representative: Beckmann, Claus
(86) International application number: PCT/JP2007/056884
(87) International publication number: WO 2007/114259

(56) References cited:
- EP-A2- 0 371 635
- JP-A- 04 154 811
- JP-A- 06 248 012
- JP-A- 53 144 991
- JP-A- 2000 128 906
- JP-A- 2003 096 108

## Description

### TECHNICAL FIELD

The present invention relates to hollow polymer particles, and more particularly, to hollow polymer particles having a thin shell wall and high void ratio, and a simple production process thereof.

### BACKGROUND ART

Hollow polymer particles are widely used as microcapsules in which various functional substances are contained within the particles. In addition, since these particles have unique light scattering properties attributable to internal pores, they are known to be useful as light scattering agents and light scattering assistants for imparting performance such as luster, opacity or whiteness in fields such as coatings and paints for paper, fibers or leather. Moreover, since the insides of these particles are hollow, they can be expected to demonstrate high bulk, weight reduction and heat insulating effects.

Several processes have been proposed for producing such hollow polymer particles. For example, a process has been proposed for obtaining hollow polymer particles by adding base to latex, containing polymer particles having at least a three-layer structure, comprising a core layer polymer composed of a copolymer of 20 to 60% by mass of a carboxyl group-containing monomer and 80 to 40% by mass of a monomer capable of copolymerizing there with, an intermediate layer polymer composed of a copolymer of 1 to 12% by mass of a carboxyl group-containing monomer and 99 to 88% by mass of a monomer capable of copolymerizing there with, and a surface layer copolymer composed of a polymer of a monomer not containing carboxyl groups, to make the pH of the latex to 8 or more, and adding acid to make the pH of the latex to 7 (see, for example, Patent Document 1).

In addition, a production process of hollow polymer particles is disclosed that uses a dynamic swelling method (see, for example, Patent Document 2). In this production process, by first absorbing a monomer such as divinylbenzene, a water-insoluble organic solvent such as toluene, and a liposoluble polymerization initiator into seed polymer particles such as polystyrene particles in a hydrophilic organic solvent, the seed polymer particles are swollen or dissolved. According to this procedure, the water-insoluble organic solvent dissolves the seed polymer particles, allowing the obtaining of liquid droplets containing a mixture of the seed polymer particles, monomer, water-insoluble organic solvent and liposoluble polymerization initiator. When heated in this state, the monomer in the liquid droplets polymerizes due to the presence of the liposoluble polymerization initiator, a first shell layer is formed composed of a polymer film of the monomer, and seed polymer particles dissolved in the water-insoluble organic solvent are present therein. By drying the particles obtained in this manner, the water-insoluble organic solvent of the core portion volatilizes, and hollow polymer particles are obtained having a second shell layer in which the seed polymer particles are adhered to the inside of a shell layer composed of the polymer film of the monomer.

However, in the process proposed in Patent Document 1, since polymer particles having a structure including at least three layers are produced in advance in order to obtain hollow polymer particles, the process is excessively complex. In addition, since it is also necessary to carry out acid treatment and post-treatment after treating the resulting particles with base, numerous steps and considerable time are required. Moreover, since hollow particles are produced using particles having a three-layer structure, it is difficult to increase the void ratio of the resulting hollow polymer particles.

In the process disclosed in Patent Document 2 as well, seed polymer particles are required as previously described to obtain hollow polymer particles, and since it is necessary to go through a plurality of steps including dispersing the seed polymer particles in a hydrophilic organic solvent followed by swelling the seed polymer particles by a dynamic swelling method and carrying out seed polymerization, numerous steps and considerable time are required. In addition, the void ratio of hollow polymer particles obtained with this process is low since the particles have a second shell layer formed from a seed polymer in the inside wall, the size of the resulting particles is only on the micrometer order, while nanosize particles cannot be obtained.

In this manner, since production processes of hollow polymer particles known in the prior art are typically required to go through a plurality of steps and have poor production efficiency, there are expectations for the development of a simple process. In addition, in terms of the application of hollow polymer particles, there are also expectations for improving the void ratio of hollow polymer particles produced.

Therefore, studies were conducted on a process for allowing the obtaining of hollow particles having a small number of steps, and for example, a process was disclosed by which fine particles are obtained in which a target component is enveloped in the hollow portion of hollow fine particles composed of a shell and hollow portion by adding a solution, in which a target component and polymerization initiator are uniformly dissolved in a monomer component, to water containing a dispersion stabilizer, stirring while heating, and carrying out suspension polymerization (see, for example, Patent Document 3). In this process, solvent-enveloped fine particles can be obtained if a specific organic solvent is used for the target component, and single-layer, hollow polymer fine particles can be obtained by then removing this solvent.

However, in the process proposed in Patent Document 3, although hollow polymer particles can be obtained without going through a plurality of steps, complexity of all steps of the polymerization itself cannot be avoided, such as the use of a dispersion stabilizer to disperse a solution of target component and polymerization initiator uniformly dissolved in a monomer component in water, and the use of a special dispersion method, such as a dispersion method that uses mechanical shear force using a homogenizer or membrane emulsification. In addition, the size of the droplets in the dispersion obtained from the above-mentioned dispersion method is not uniform but rather includes mixture of droplets having various different particle diameters, thus resulting in the problem of multiple dispersion in the particle size distribution of the ultimately obtained hollow polymer particles. Consequently, the obtaining of hollow particles having a uniform particle diameter is premised on improving the pretreatment steps, such as using a special emulsification method that uses porous glass (SPG).

All of the previously described hollow polymer particle production methods are completely unrelated to methods involving the induction of a hollow structure by a spontaneous organization process utilizing, for example, the polymerization activity of a polymerizable monomer molecular structure or physical changes in a growing polymer accompanying monomer polymerization, and obtain hollow particles by increasing the number of steps based on a processing technique. In the production of hollow polymer particles using a radical polymerization system, there are many aspects of this production that still rely on this method, and the development of a production process that conserves on energy and places a small burden on the environment has become a challenging topic.

In addition, a method has also been disclosed for obtaining hollow fine particles by carrying out a radial polymerization reaction at a water/oil interface in a W/O inverted emulsion medium by utilizing the temperature-dependent hydrophilic-hydrophobic changes of poly(N- isopropylacrylamide) (see, for example, Non-Patent Document 1). In this method, an aqueous solution in which N-isopropylacrylamide and tetraethylenepentamine have been dissolved is first emulsified in toluene in which a radical polymerization crosslinking agent in the form of divinylbenzene has been dissolved (oil layer) to form a W/O inverted emulsion. Subsequently, benzoyl peroxide is added to the oil phase to induce an oxidation-reduction reaction between the peroxide and the tetraethylenepentamine dissolved in water droplets at the water/oil interface, and the resulting radicals cause a polymerization reaction of the N-isopropylacrylamide in the water droplets. Since the poly(N-isopropylacrylamide) that grows in the water droplets is a temperature-sensitive polymer, if the reaction temperature is not less than the lower critical solution temperature of poly(N-isopropylacrylamide) (LCST, 32 to 34°C), the poly(N-isopropylacrylamide) becomes hydrophobic and moves to the water/oil interface rather than the water droplets. At that interface, a copolymerization reaction proceeds with the divinylbenzene crosslinking agent dissolved in a large amount in the oil phase, resulting in the formation of a crosslinked polymer that is insoluble in both water and oil at the water/oil interface.

In the method described in Non-Patent Document 1, although the polymerization process itself allows the obtaining of hollow particles without having to go through a plurality of steps, due to the formation of a W/O inverted emulsion, the use of an emulsifier is required, and since it is also necessary to select a suitable type of emulsifier and amount used along with a suitable emulsification method and the like, it is necessary to carry out complex procedures in all steps. In addition, since a radical polymerization reaction proceeds at the water/oil interface of a W/O inverted emulsion in this method, even if the size of the water droplets is made to be uniform prior to initial polymerization, since the size of the water droplets becomes irregular overall during the entire polymerization process, particle diameter and film thickness of the hollow particles cannot controlled, and as a result, only comparatively large particles having a non-uniform diameter of 1 to 3 µm and having a large shell thickness of 100 nm can be obtained. Moreover, the radical polymerization of this method cannot be carried out at all at the water/oil interface in the absence of a heat-sensitive, water-soluble polymer as indicated by the lower critical solution temperature (LCST), thereby preventing the deployment of this method to a wide range of monomers. In addition, since this method uses a W/O inverted emulsion, the discharge of a large amount of organic solvent in the form of toluene cannot be avoided, thereby placing an extremely large burden on the environment.

[Patent Document 1] Japanese Unexamined Patent Application, First Publication No. H6-248012
[Patent Document 2] Japanese Unexamined Patent Application, First Publication No. H8-020604
[Patent Document 3] Japanese Unexamined Patent Application, First Publication No. 2003-096108
[Non-Patent Document 1] Q. Sun, et a!., Journal of American Chemical Society, Vol. 127, 2005, p. 8274-8275

### DISCLOSURE OF THE INVENTION

### Problems to be Solved by the Invention

With the foregoing in view, an object of the present invention is to provide hollow polymer particles and colored hollow polymer particles on the nanometer order having a high void ratio, and a simple and environmentally-friendly production process for producing these particles by using a pseudo-emulsion radical polymerization step without requiring the use of a dispersion stabilizer such as a surfactant or the like. Means for Solving the Problems

As a result of conducting extensive studies to solve the aforementioned problems, the inventors of the present invention found that by polymerizing a monomer group including a radial polymerizable water-soluble monomer (A) and a radical polymerizable water-insoluble monomer (B) in an aqueous medium, hollow polymer particles having a hydrophilic surface and high void ratio are formed accompanied by spontaneous formation of a polymer organization during progression of the polymerization reaction, thereby leading to completion of the present invention.

Namely, the present invention provides hollow polymer particles comprising a shell wall having for a main component thereof a copolymer obtained by polymerizing a monomer group (I) including a radical polymerizable water-soluble monomer (A) and a radical polymerizable water-insoluble monomer (B), wherein
the thickness of the shell wall is 5 to 80 nm,
the molar ratio of (B)/(A) of the radical polymerizable water-insoluble monomer (B) to the radical polymerizable water-soluble monomer (A) is 3.5 to 12,
the radical polymerizable water-soluble monomer (A) is a monomer including at least one type of group selected from the group consisting of an amido group, amino group, carboxyl group and salt thereof, and sulfonic acid group and salt thereof within the structure thereof, and
the radical polymerizable water-insoluble monomer (B) is at least one type selected from the group consisting of acrylates and methacrylates, and provides a production process thereof.

### Effects of the Invention

According to the present invention, hollow polymer particles can be obtained that have a high void ratio. These hollow polymer particles can be obtained by a simple and easily reproducible process in the form of the production process of the present invention including pseudo-emulsion radical polymerization of a radical polymerizable water-soluble monomer and a radical polymerizable water-insoluble monomer in an aqueous medium using a water-soluble polymerization initiator. Since the resulting hollow polymer particles have monodispersibility, the shell thickness thereof is thin at 5 to 80 nm and the surface thereof is hydrophilic, they exist stably in an aqueous medium. The hollow polymer particles are able to incorporate various functional molecules into the hollow portions thereof either during or after their production, thereby allowing the hollow polymer particles to have various functions based on the incorporated functional molecules. In particular, colored hollow polymer particles can also be obtained by physically bonding (adsorption) or chemically bonding a coloring compound.

Thus, the hollow polymer particles of the present invention can be applied in the fields of aqueous coatings, paints and the like as light scattering improvers and whitening pigments for imparting functions such as luster, opacity or whiteness to paper, fibers, leather and the like by using their unique light scattering properties attributable to internal pores. In addition, the hollow polymer particles of the present invention can also be applied to cosmetics by utilizing the light scattering, moisture absorption and oil absorption properties attributable to their hollow structure, and can also be used as an ink jet receiving layer. In addition, due to their hollow structure, the hollow polymer particles of the present invention can also be applied as heat insulating or soundproofing materials since they are able to inhibit the transmission of heat and sound, and can also be used as weight reduction agents since they are able to reduce weight for an equal volume. Moreover, the hollow polymer particles of the present invention can also be used as chemical substance retention agents containing various chemical substances therein, and can also be used as chemical substance sustained release agents and materials for drug delivery systems (DDS) capable of gradually releasing components contained therein in response to some form of stimulus such as temperature, pressure or pH.

The hollow polymer particle production process of the present invention does not require complex steps extending over a large number of stages, and uses a conventionally employed radical polymerization system, thereby making it possible to provide hollow polymer particles inexpensively for the various applications described above, while also facilitating structural design corresponding to each type of application.

### BRIEF DESCRIPTION OF THE DRAWINGS

Fig. 1 shows the particle size distribution of hollow polymer particles obtained in Example 1 as determined by measurement of dynamic light scattering.
Fig. 2 is an SEM micrograph representing the shape of hollow polymer particles obtained in Example 1.
Fig. 3 is an SEM micrograph representing the hollow shape of hollow polymer particles obtained in Example 1 as observed after crushing the particles.
Fig. 4 is an FE-SEM micrograph representing the hollow shape of hollow polymer particles obtained in Example 1 as observed after crushing the particles.
Fig. 5 shows the ¹H-NMR spectrum in heavy water of hollow polymer particles obtained in Example 1.

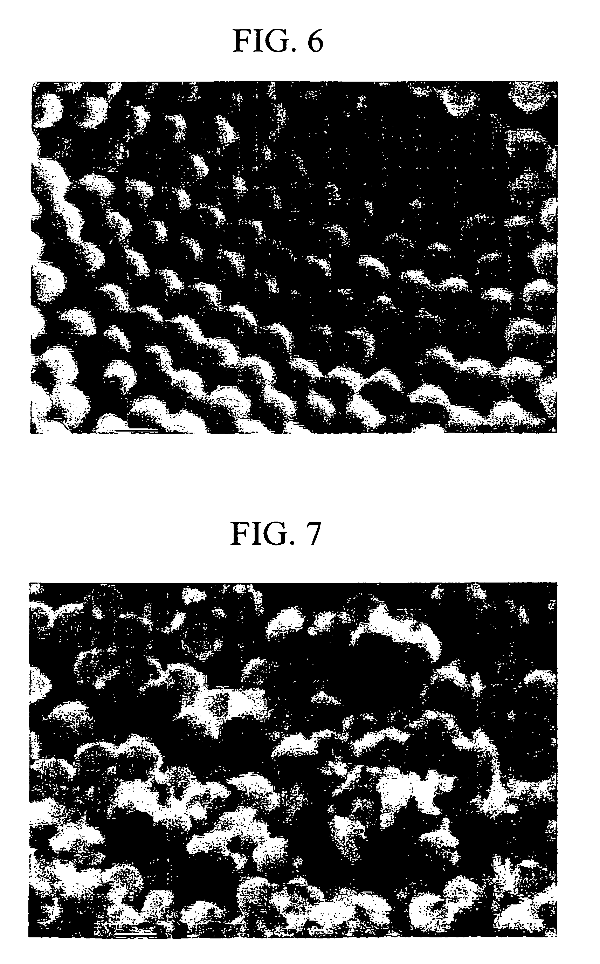

Fig. 6 is an SEM micrograph representing the shape of hollow polymer particles obtained in Example 2.
Fig. 7 is an SEM micrograph representing the hollow shape of hollow polymer particles obtained in Example 2 as observed after crushing the particles.

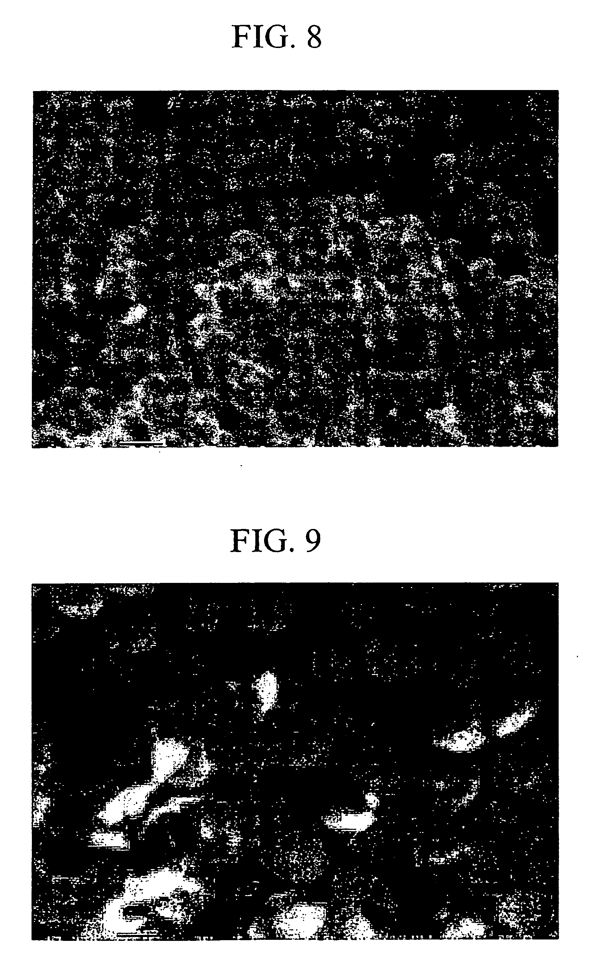

Fig. 8 is an SEM micrograph representing the hollow shape of hollow polymer particles obtained in Example 3 as observed after crushing the particles.
Fig. 9 is an SEM micrograph representing the hollow shape of hollow polymer particles obtained in Example 4 as observed after crushing the particles.

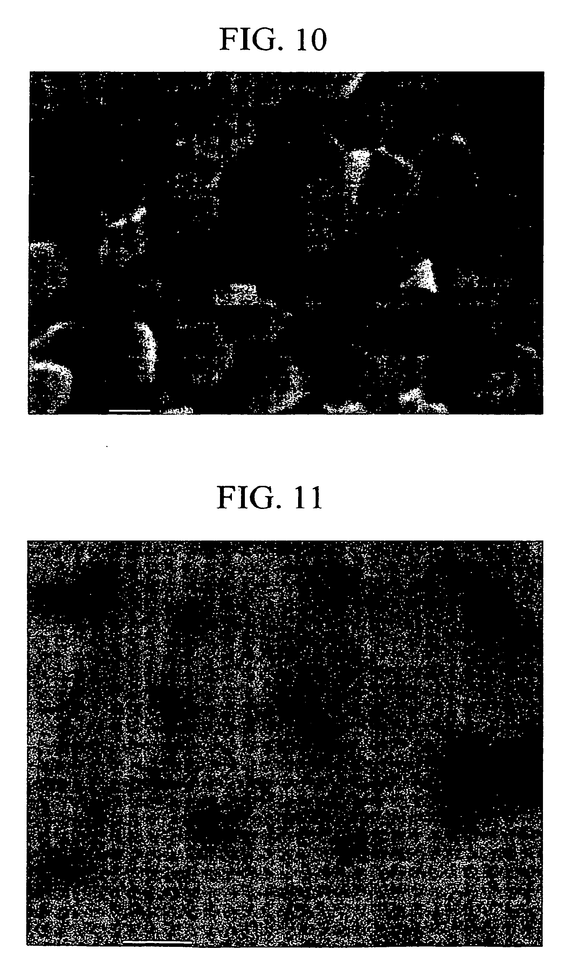

Fig. 10 is an SEM micrograph representing the hollow shape of hollow polymer particles obtained in Example 5 as observed after crushing the particles.
Fig. 11 is an SEM micrograph representing the hollow shape of hollow polymer particles obtained in Example 6 as observed after crushing the particles.
Fig. 12 is an SEM micrograph representing the hollow shape of hollow polymer particles obtained in Example 27 as observed after crushing the particles.

### BEST MODE FOR CARRYING OUT THE INVENTION

The following provides a detailed explanation of the present invention.
The hollow polymer particles of the present invention use as essential raw materials thereof a radical polymerizable water-soluble monomer (A) and a radical polymerizable water-insoluble monomer (B), have a shell in the form of a polymer layer obtained by copolymerizing this group of monomers (I), and have a thin shell thickness of 5 to 80 nm. The thickness of the shell composed of the polymer layer can be controlled to within the range of 5 to 80 nm by adjusting the types and usage proportions of the water-soluble monomer (A) and the water-insoluble monomer (B). Hollow polymer particles having a shell thickness of less than 5 nm or more than 80 nm are undesirable from the viewpoint of industrial application. This is because if the shell thickness is less than 5 nm, the shape stability of the hollow polymer particles becomes poor, while if the shell thickness exceeds 80 nm, the carrier function when loading a substance into the hollow portion of the hollow polymer particles decreases.

Even in the case of ordinary radical polymerization systems, if those properties originating in the characteristics of the monomers used as raw materials, including polymerization activity, physical changes in polymer segments during growth from monomers into polymer, the type of polymerization initiator and the polymerization medium, are effectively utilized, molecular self-assembly can be occur simultaneous to the polymerization reaction, thereby making it amply possible to induce a domain of a polymer organization.

In the present invention, the spontaneous formation of hollow polymer particles was completed by combining an aqueous polymerization initiator with a monomer group (I) including a radical polymerizable water-soluble monomer (A) and a radical polymerizable water-insoluble monomer (B), and radical polymerizing the combination thereof in a completely aqueous medium. Namely, in the case of copolymerizing two types of monomers having different polymerization activities and affinities for an aqueous medium, a phenomenon is utilized by which, instead of random polymerization, a segment of dense monomer unit 1 and a segment of dense monomer unit 2 are formed in the copolymer, and this is then able to function as an amphiphilic polymer.

When copolymerizing monomer group (I) including radical polymerizable water-soluble monomer (A) and radical polymerizable water-insoluble monomer (B) in an aqueous medium, the molar concentration of water-soluble monomer (A) is extremely low in comparison with that of water-insoluble monomer (B). If polymerization is carried out using a water-soluble initiator, water-soluble monomer (A) is polymerized preferentially and hydrophilic segments originating in monomer (A) are formed. However, when the hydrophilic segments of the terminal radical grow to a certain size, depletion interaction is strongly induced between droplets of water-insoluble monomer due to factors such as an increase in the degree of polymerization, and a phenomenon occurs in which hydrophilic segments are concentrated on the surfaces of the droplets as they grow. In other words, the periphery of the growing ends of the hydrophilic segments becomes embedded in water-insoluble monomer (B). Thus, an addition reaction of water-insoluble monomer (B) begins at the radical growing ends of the hydrophilic segments, and polymerization of water-insoluble monomer (B) proceeds rapidly. As a result, a copolymer is formed having two segments with mutually contrary properties. A copolymer having hydrophobic segments and hydrophilic segments formed in this manner functions as a so-called polymer surfactant, and during the course of the polymerization reaction, the copolymer spontaneously organizes into bimolecular membrane polymer organized particles (polymer vesicles) in which hydrophobic segments are sandwiched there between. As a result, the majority of the remaining water-insoluble monomer (B) polymerizes while being incorporated into the membrane of the polymer organized particles, ultimately yielding hollow polymer particles having a thin shell wall in which inner and outer surfaces are hydrophilic resembling a polymer vesicle structure. In the present invention, a polymerization process like that described above is defined as pseudo-emulsion polymerization.

Although hollow polymer particles obtained in the manner described above can be produced to have a mean particle diameter of 50 nm to 5 µm corresponding to the objective, hollow polymer particles having a mean particle diameter of 50 nm to 1 µm in particular can be easily produced from the viewpoint of enabling the polymer organization described above to be present in a stable manner due to the use of pseudo-emulsion polymerization for the production process. In addition, since the polymer organization which are spontaneously formed according to the types of water-soluble monomer (A), water-insoluble monomer (B) and water-soluble initiator, and the blending ratios thereof, serve as the base of the hollow polymer particles, the hollow polymer particle size distribution is monodispersed, thereby also capable of producing the hollow polymer particles having the variation coefficient of 0.1 or less.

In addition, the hollow polymer particles of the present invention can be obtained in which the thickness of the shell wall varies according to the particle diameter of the particles. For example, in the case of hollow polymer particles having a mean particle diameter of 50 nm to less than 300 nm, these particles can be produced to have a shell wall thickness of 5 nm to 30 nm, while in the case of hollow polymer particles having a mean particle diameter of 300 nm to less than 1 µm, particles can be produced in which the shell wall thickness is 5 nm to 80 nm. Although this shell wall thickness can be suitably selected to produce hollow polymer particles within the above ranges corresponding to the objective, in order to obtain a high void ratio and allow the shell wall to maintain adequate strength, hollow polymer particles having a mean particle diameter of 50 nm to less than 300 nm more preferably have a shell wall thickness of 5 nm to 15 nm, while hollow polymer particles having a mean particle diameter of 300 nm to less than 1 µm more preferably have a shell wall thickness of 10 to 40 nm. Furthermore, as well as the particle size, hollow polymer particles in which the shell wall thickness is uniform can also be obtained by spontaneous organization accompanying with the polymerization of monomer. Namely, not only the thicknesses of all shell of one particle are uniform, but also the shell thicknesses of all particles obtained under identical conditions are uniform. In the present invention, the mean value resulting from measurement of shell thickness at 30 locations of hollow polymer particles observed by SEM is taken to be the thickness of the shell wall.

The radical polymerizable water-soluble monomer (A) used in the present invention is a monomer including at least one type of group selected from the group consisting of an amido group, amino group, carboxyl group and salt thereof, and sulfonic acid group and salt thereof within the structure thereof. For example, water-soluble monomer (A) having a carboxyl group or sulfonate group, as well as alkaline metal salts or ammonium salts thereof, can be used. More specifically, examples of water-soluble monomers having an amido group include acrylamide, N-substituted (meth)acrylamides or N,N-di-substituted (meth)acrylamides such as N-ethylacrylamide, N-ethylmethacrylamide, N-isopropylacrylamide, N-isopropylmethacrylamide, N-n-propylacrylamide, N-n-propylmethacrylamide, N-cyclopropylacrylamide, N-cyclopropylmethacrylamide, N,N-dimethylacrylamide, N,N-diethylacrylamide, N,N-dimethylaminopropylacrylamide, N-methyl-N-ethylacrylamide, N-methyl-N-isopropylacrylamide or N-methyl-N-n-propylacrylamide, N-hydroxyethylacrylamide, acryloylmorpholine, N-vinylpyrrolidone, diacetoneacrylamide and N,N'-methylenebisacrylamide. Examples of water-soluble monomers having an amino group include allylamine, N,N-dimethylaminoethylacrylate and dimethylamino- ethylmethacrylate. In addition, examples of water-soluble monomers having a carboxyl group include acrylic acid, methacrylic acid and maleic acid, while examples of water-soluble monomers having a hydroxy group include 2-hydroxyethylacrylate, 2-hydroxypropylacrylate, 2-hydroxyethylmethacrylate, 2-hydroxypropylmethacrylate, 4-hydroxybutylacrylate and 1,4-dicyclohexanedimethanol monoacrylate. Examples of water-soluble monomers having a sulfonate group include styrene sulfonic acid, sodium styrene sulfonate, lithium styrene sulfonate, ammonium styrene sulfonate, styrene sulfonic acid ethyl ester, styrene sulfonic acid cyclohexyl ester and 2-acrylamide-2-methylpropane sulfonate. Moreover, a quaternary monomer may also be used that is obtained by converting to a quaternary form a monomer synthesized by reacting an organic amine with vinylpyridine or glycidyl methacrylate.

Those water-soluble monomers (A) having an amido group, amino group, carboxyl group or salt thereof, or sulfonic acid group or salt thereof in the structure thereof are preferable in terms of being superior in terms of ease of industrial acquisition, water solubility and ease of radical polymerization.

Moreover, N-substituted acrylamides and N,N-di- substituted acrylamides are considered to have surface activating action as a result of having a hydrophobic group and hydrophilic group in a single molecule thereof, and homopolymers thereof have the unique property of the degree of water solubility changing according to the degree of polymerization and temperature of the aqueous medium. As a result of having these properties, the previously described reaction mechanism can be easily achieved thereby facilitating production of the hollow polymer particles of the present invention.

In addition, the unique properties of homopolymers of N-substituted acrylamides and N,N-di-substituted acrylamides of having a lower critical solution temperature (LCST) in an aqueous solution, and causing the occurrence of coil-globule transition in the vicinity of this temperature, namely the polymer chain hydrating and becoming hydrophilic at low temperatures while contracting and becoming hydrophobic at high temperatures, also has an effect on the surface structure of the resulting hollow particle polymers, with the hollow polymer particles having a temperature-responsive layer such that the particle diameter of the hollow polymer particles becomes larger at low temperatures and becomes smaller at high temperatures bordering on the LCST.

The thickness of this temperature-responsive layer in an aqueous medium changes according to the ratio of moles used between radical polymerizable water-insoluble monomer (B) and radical polymerizable water-soluble monomer (A), and also differs according to the particle diameter of the resulting hollow polymer particles. For example, in the case of hollow polymer particles having a mean particle diameter of 50 nm to less than 300 nm, particles can be produced that have a thickness of the temperature-responsive layer of 5 to 100 nm, while in the case of hollow polymer particles having a mean particle diameter of 300 nm to less than 1 µm, particles can be produced in which the thickness of the temperature-responsive layer is 5 to 200 nm.

The monomers used for the radical polymerizable water-insoluble monomer (B) used in the present invention have a group that is polymerizable with the aforementioned water-soluble monomer (A), the solubility thereof with respect to distilled water is preferably 0.5% by mass or less, and an acrylate or methacrylate is used due to its superior reactivity with the water-soluble monomer (A) and its ease of industrial acquisition.

Examples of acrylates include butyl acrylate, lauryl acrylate, cyclohexyl acrylate, phenyl acrylate, isobornyl acrylate, glycidyl acrylate, tert-butyl-α-trifluoromethyl acrylate, 1-adamantyl-α-trifluoromethyl acrylate, (3-methyl-3-oxcetanyl)methyl acrylate, acryloylpropyl trimethoxysilane, acryloylpropyl triethoxysilane, methyl acrylate and ethyl acrylate.

In addition, examples of methacrylates include methyl methacrylate, ethyl methacrylate, n-butyl methacrylate, i-butyl methacrylate, cyclohexyl methacrylate, lauryl methacrylate, stearyl methacrylate, glycidyl methacrylate, allyl methacrylate, 2,2,2-trifluoroethyl methacrylate, (3-methyl-3-oxcetanyl)methyl methacrylate, methacryloylpropyl trimethoxysilane and methacryloylpropyl triethoxysilane. These radical polymerizable water-insoluble monomers (B) can be used alone or two or more types can be used as a mixture. Unless specifically indicated otherwise, (meth)acrylates used in the following descriptions are used generically referring to acrylates alone, methacrylates alone and mixtures thereof.

Among the radical polymerizable water-insoluble monomers (B) described above, during the course of forming a copolymer or after having formed a copolymer with the previously described radical polymerizable water-soluble monomer (A), those having a cyclic ether structure such as glycidyl (meth)acrylate or oxcetanyl (meth)acrylate can be crosslinked within that copolymer or between molecules thereof, and since this crosslinking reaction is thought to contribute to enhanced strength of the copolymer forming the shell portion of the resulting hollow polymer particles as well as enhanced stability of the hollow polymer particles, such polymerizable water-insoluble monomers can be used particularly preferably.

Bifunctional di(meth)acrylates can also be used alone or as a combination of two or more types for the radical polymerizable water-insoluble monomer (B), examples of which include poly-ethylene di(meth)acrylates such as ethylene di(meth)acrylate, diethylene (meth)acrylate or triethylene di(meth)acrylate, poly-propylene di(meth)acrylates such as propylene di(meth)acrylate, dipropylene di(meth)acrylate or tripropylene di(meth)acrylate, and glycerol di(meth)acrylates. In the case of using these di(meth)acrylates, it is preferable to combine their use with a monofunctional (meth)acrylate previously described for the purpose of preventing aggregation of the resulting hollow particles, and in particular, the usage ratio of (meth)acrylate in the radical polymerizable water-insoluble monomer (B) in terms of a molar ratio is preferably 0.7 or more.

A compound other than a (meth)acrylate, such as a styrene compound, vinyl ester, vinyl ether or bisvinyl compound, can be used alone or as a combination of two or more types for the radical polymerizable water-insoluble monomer (B) in combination with a (meth)acrylate in terms of easily obtaining the hollow polymer particles of the present invention, and in particular, the usage ratio of (meth)acrylate in the radical polymerizable water-insoluble monomer (B) in terms of a molar ratio is preferably 0.5 or more.

The aforementioned styrene compound is a compound having a styryl group, examples of which include styrene, α-methylstyrene, vinyltoluene, α-chlorostyrene, o-, m-and p-chlorostyrene, p-ethylstyrene, p-tert-butoxystyrene, m-tert-butoxystyrene, p-acetoxystyrene, p-(1-ethoxyethoxy) styrene, p-methoxystyrene, styryltrimethoxysilane, styryltriethoxysilane, vinylnaphthalene, vinylbiphenyl, vinylanthracene and vinylpyrene.

Examples of the vinyl esters include vinyl formate, vinyl acetate, vinyl propionate, vinyl monochloroacetate, vinyl pivalate and vinyl butyrate.

Examples of the vinyl ethers include methyl vinyl ether, ethyl vinyl ether, n-propyl vinyl ether, isopropyl vinyl ether, n-butyl vinyl ether, isobutyl vinyl ether, 2-ethylhexyl vinyl ether, octadecyl vinyl ether, cyclohexyl vinyl ether, allyl vinyl ether, cyclohexane dimethanol vinyl ether, 1,4-butanediol divinyl ether, nonanediol divinyl ether, cyclohexanediol divinyl ether, cyclohexane dimethanol divinyl ether, trimethylpropane trivinyl ether, pentaerythritol tetravinyl ether and phenyl vinyl ether.

Examples of the bisvinyl compounds include divinylbenzene, and these are preferably from the viewpoint of allowing the production of stable hollow particles due to the formation of a crosslinked structure within the shell of the hollow polymer particles.

Although the usage ratio between the radical polymerizable water-insoluble monomer (B) and the radical polymerizable water-soluble monomer (A) is selected according to mean particle diameter of the target hollow polymer particles, the thickness of the shell wall and the like, from the viewpoint of obtaining hollow polymer particles capable of stably existing in an aqueous medium and the stability of the hollow structure, the molar ratio of (B)/(A) of the radical polymerizable water-insoluble monomer (B) to the radical polymerizable water-soluble monomer (A) is preferably 3.5 to 12, and particularly preferably 3.5 to 10. Furthermore, in the production process of the present invention to be described later, when controlling the mean particle diameter of the hollow polymer particles or the thickness of the shell wall by adding the radical polymerizable water-insoluble monomer (B) after the polymerization has progressed and the hollow polymer particles have been formed to a certain extent instead of adding monomer group (I) all at once, stable hollow polymer particles can be obtained even if the above molar ratio exceeds 12.

The hollow polymer particles of the present invention can be easily obtained by emulsion polymerizing the monomer group (I) containing the radical polymerizable water-soluble monomer (A) and the radical polymerizable water-insoluble monomer (B) in an aqueous medium.
The following provides a detailed description of the production process of the present invention.

The production process of the present invention enables one-pot production of hollow polymer particles, or in other words, enables the production of hollow polymer particles in the same reaction vessel without requiring an isolation procedure, and includes pseudo-emulsion radical polymerization of the radical polymerizable water-soluble monomer (A) and the radical polymerizable water-insoluble monomer (B) in an aqueous medium using a water-soluble polymerization initiator.

Examples of aqueous media used for the pseudo-emulsion polymerization other than when using water alone include water and a lower alcohol such as methanol, ethanol or isopropanol, water and a polyvalent alcohol such as ethylene glycol, propylene glycol, butanediol, diethylene glycol or triethylene glycol, water and a ketone such as acetone or methyl ethyl ketone, and water and an ether such as tetrahydrofuran, either used alone or in the form of a mixed solvent including a mixture of a plurality of types thereof.

Although the blending ratio when using a mixed solvent can be suitably selected according to the purpose so that a water-soluble polymerization initiator described below and the radical polymerizable water-soluble monomer (A) are soluble, and the solubility of the radical polymerizable water-insoluble monomer (B) is within the range of 0.5% by mass or less, the ratio of water is preferably 50% by mass or more and particularly preferably 80% by mass or more to allow the water-soluble polymerization initiator to maintain a high efficiency of polymerization initiation.

Although there are no particular limitations on the water-soluble polymerization initiator and various such initiators can be used, persulfates or amino group-containing azo compounds are used preferably, examples of which include potassium persulfate (KPS), ammonium persulfate (APS), 2,2'-azobis(2-amidinopropane) dihydrochloride, 2,2'-azobis [2-(imidazolin-2-yl)propane] dihydrochloride, 2,2'-azobis [2-(2-imidazolin-2-yl)propane] dihydrochloride dihydrate, 2,2'-azobis[N-(2-carboxyethyl)-2-methylpropionamide] dihydrochloride, 2,2'-azobis{2-[1-(2-hydroxyethyl)-2- imidazolin-2-yl]propane} dihydrochloride, 2,2'-azobis [2-(2-imidazolin-2-yl)propionamide], 2,2'-azobis[-methyl-N-(2-hydroxyethyl)propionamide], 2,2'-azobis{2-methyl-N-[1,1-bis(hydroxymethyl)-2-hydroxyethyl]propionamide} and 2,2'-azobis(2-methylbutaneamidooxime) dihydrochloride tetrahydrate.

Although the ratio at which these water-soluble polymerization initiators are used may be suitably selected within a range of 0.1 to 5 parts by mass based on 100 parts by mass of the total amount of radical polymerizable water-soluble monomer (A) and radical polymerizable water-insoluble monomer (B), the ratio is more preferably selected within a range of 0.5 to 3 parts by mass for the purpose of increasing the efficiency of the polymerization reaction and inhibiting aggregation of the hollow polymer particles.

Although the target hollow polymer particles can be produced without using any surfactant or other dispersion stabilizer in the production of the hollow polymer particles of the present invention, various types of suitable dispersion stabilizers may be used as necessary. Although examples of dispersion stabilizers include anionic surfactants, nonionic surfactants, cationic surfactants, amphoteric surfactants and organic suspension protective agents, the use of an anionic surfactant or cationic surfactant is particularly preferable since this allows the hollow polymer particles to be obtained efficiently.

Examples of anionic surfactants include rosinates such as potassium rosinate or sodium rosinate, sodium salts or potassium salts of fatty acids such as potassium oleate, potassium laurate, sodium laurate, sodium stearate or potassium stearate, sulfuric acid esters of aliphatic alcohols such as sodium lauryl sulfate, and alkylallyl sulfonates such as sodium dodecylbenzene sulfonate.

Examples of nonionic surfactants include alkyl esters, alkyl ethers and alkylphenyl ethers of polyethylene glycol.

Examples of cationic surfactants include alkyltrimethyl ammonium salt-based, dialkyldimethyl ammonium salt-based, alkyldimethylbenzyl ammonium salt-based and amine salt-based surfactants.

Examples of amphoteric surfactants include alkylamino fatty acid salts, alkylbetaines and alkyl amine oxides.

These dispersion stabilizers can be used alone or as a combination of two or more types as necessary. When using a dispersion stabilizer, an ionic surfactant or nonionic surfactant having a charge equal to the surface charge imparted to the hollow polymer particles by the water-soluble polymerization initiator is preferably used to prevent aggregation of the resulting hollow polymer particles.

Although the amount of dispersion stabilizer used may be suitably selected as necessary, if the concentration thereof in the initial stage of the reaction is excessively high, ordinary emulsion polymerization proceeds. Since this makes it difficult for the particles to have a hollow structure, the amount used is reduced during the initial stage and then added later accompanying formation of the particles.

In the production process of the present invention, although the reaction temperature of polymerization may be suitably set within a range of 35 to 90°C in coordination with the polymerization initiation temperature of the water-soluble polymerization initiator used, the temperature is preferably set to a range of 40 to 85°C and more preferably 60 to 80°C from the viewpoint of increasing the initiation ability of the water-soluble polymerization initiator and inhibiting destabilization of the reaction system by preventing evaporation of the aqueous medium.

In the production process of the present invention, since the synthesis efficiency of the hollow polymer particles becomes poor if the concentration of the monomers during polymerization is excessively low, while aggregation occurs easily if excessively high, the monomer concentrations are preferably suitably selected within the range of 0.5 to 20% by mass according to the purpose, and preferably selected within the range of 1 to 10% by mass from the viewpoint of allowing hollow polymer particles of higher stability to be obtained more efficiently.

A one-pot radical polymerization production process of the prior art can be employed for the production process of the present invention, including carrying out polymerization using a water-soluble polymerization initiator in the state in which the entire amounts of the radical polymerizable water-soluble monomer (A) and radical polymerizable water-insoluble monomer (B) have been added to an aqueous medium in advance.

In addition, hollow polymer particles can also be synthesized in a one-pot production process by carrying out polymerization using a water-soluble polymerization initiator in the state in which the radical polymerizable water-soluble monomer (A) and radical polymerizable water-insoluble monomer (B) have been added in advance to an aqueous medium, and the further adding radical polymerizable water-insoluble monomer (B) once the polymerization reaction has progressed. In the case of using this post-addition method, the thickness of the shell walls of the hollow structure can be increased.

There are no particular limitations on the method by which the hollow polymer particles obtained in the present invention are used, and they can be used as, for example, in the field of aqueous coatings and paints as light scattering improvers, white pigments or concealers and the like for imparting performance such as luster, opacity and whiteness to paper, fibers and leather. In addition, these hollow polymer particles can also be used as rewritable materials, anti-counterfeiting coatings or special applications paper by utilizing marking effects, coloring or decoioring effects and optical emission characteristics attributable to coloring components present in colored hollow polymer particles. Moreover, these hollow polymer particles can also be applied to cosmetics by utilizing the light scattering, moisture absorption and oil absorption properties attributable to their hollow structure, and can also be used as an ink jet receiving layer. In addition, due to their hollow structure, these hollow polymer particles can also be applied as heat insulating or soundproofing materials since they are able to inhibit the transmission of heat and sound, and can also be used as weight reduction agents since they are able to reduce weight for an equal volume. Moreover, these hollow polymer particles can also be used as chemical substance retention agents capable of containing various chemical substances therein, and can also be used as chemical substance sustained release agents and materials for drug delivery systems (DDS).
In using in applications such as these, the monodispersibility and thin shell walls of the hollow polymer particles of the present invention are considered to be effective in allowing the hollow polymer particles to efficiently and uniformly demonstrate various types of performance required by those applications, thereby giving them a high degree of usefulness.

### EXAMPLES

Although the following examples and comparative examples are indicated for providing a more detailed explanation of the present invention, the present invention is naturally not limited in any way by these explanations.

The particle diameters of particles dispersed in water were measured according to a dynamic light scattering method using the FPAR-1000 particle size measuring system manufactured by Otsuka Electronics Co., Ltd.

The shape and hollowness of fine particles were confirmed by SEM observation using the VE-9800 three-dimensional real surface view microscope manufactured by Keyence Corp., and the thickness of the shells of hollow polymer particles was measured using SEM micrographs obtained with the S-800 field-emission scanning electron microscope manufactured by Hitachi, Ltd.

### (Synthesis of Hollow Polymer Particles)

### Example 1

### <Synthesis of Hollow Polymer Particles Composed of a poly (NIPAM-co-GMA) Copolymer of N-Isopropylacrylamide (NIPAM) and Glycidyl Methacrylate (GMA)>

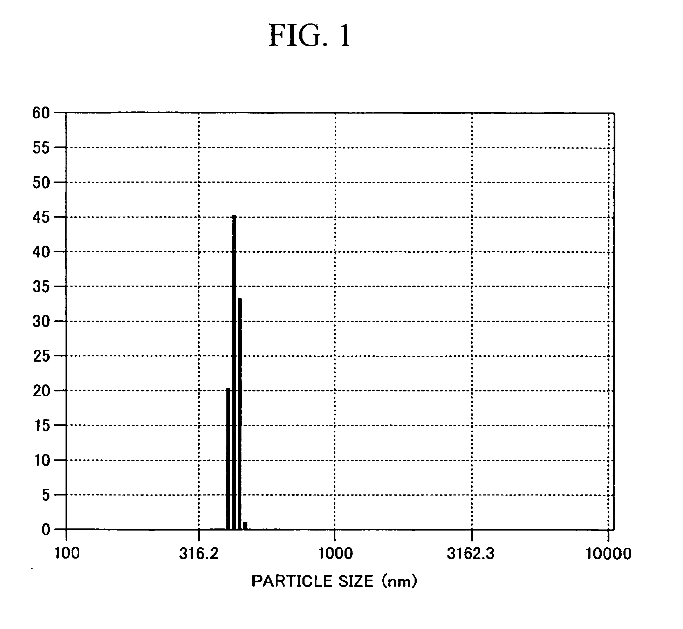

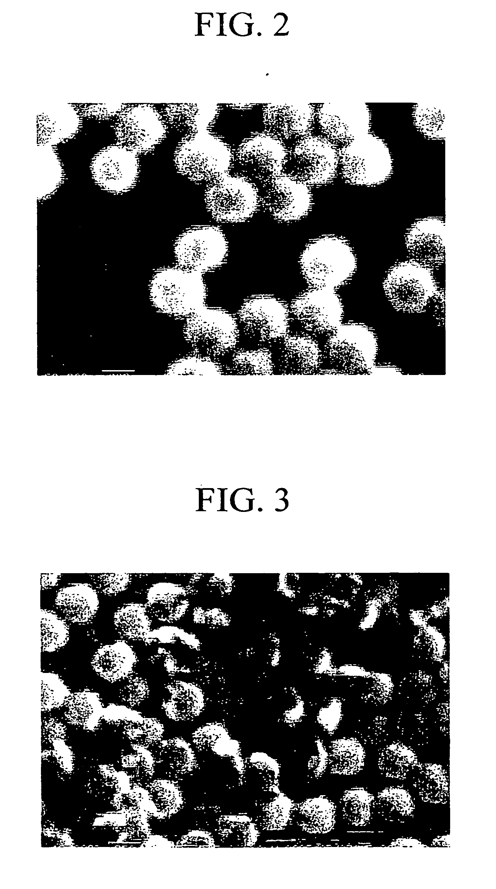

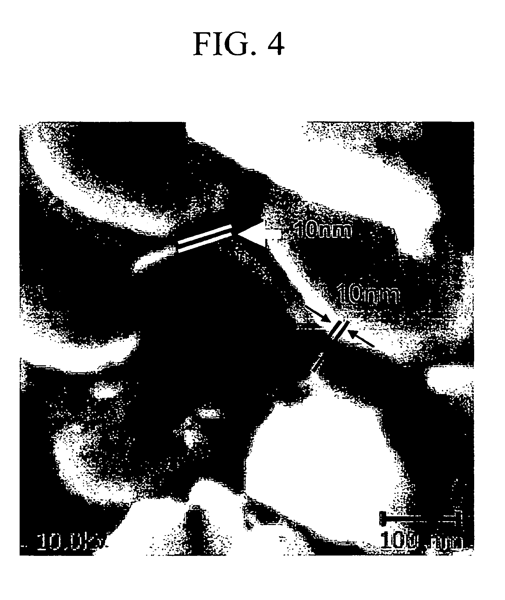

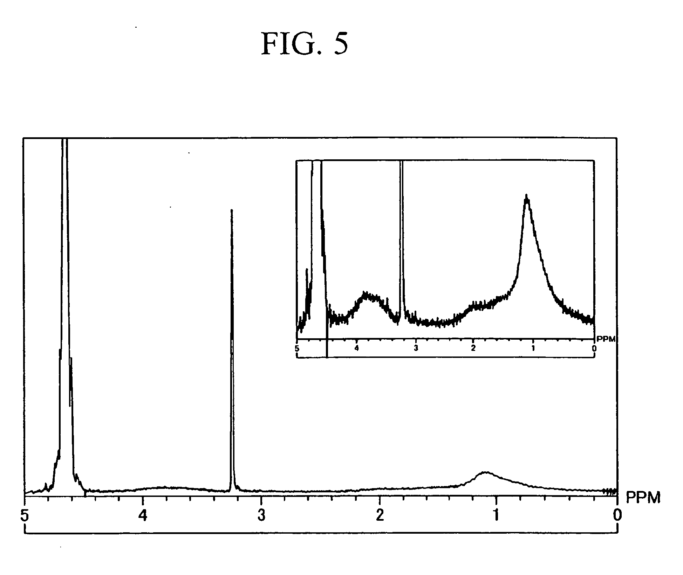

8.52 g of glycidyl methacrylate (Wako Pure Chemical Industries Ltd.) were added to 200 ml of an aqueous solution in which was dissolved 1.4 g of N-isopropylacrylamide (Kohjin Co., Ltd., abbreviated as NIPAM) followed by heating to 70°C while stirring under nitrogen atmosphere. 20 ml of an aqueous solution in which was dissolved 0.1 g of potassium persulfate (KPS, Wako Pure Chemical Industries, Ltd.) were added to this mixture (GMA/NIPAM = 4.8 mol/mol). A particle dispersion was obtained by stirring for 1 hour at the same temperature. This dispersion was then washed and purified by centrifugal separation. Identification of the purified particles was carried out by dynamic light scattering, SEM and ¹H-NMR. When the particle diameter of the particles was measured by dynamic light scattering, a mono-dispersed particle size distribution was demonstrated (Fig. 1). The mean particle diameter at 25°C was 407 nm and the coefficient of variation was 0.03. The mean particle diameter at 50°C was 325 nm, and a temperature-responsive layer of about 40 nm was confirmed to be present. When the shape of the fine particles in the dry state was observed with an SEM, the particles were found to be mono-dispersed spherical particles (Fig. 2). When the shape of these fine particles was observed after crushing, they were confirmed to be hollow polymer particles having a hollow center (Fig. 3). The thickness of the shell wall of these particles was 10 nm (Fig. 4). When these hollow particles were dispersed in D₂O and measured by ¹H-NMR at 25°C, the spectrum shown in Fig. 5 was obtained, and the signals thereof were respectively assigned to CH₃ and CH moieties of isopropyl groups attributable to the hydrophilic poly(N-isopropylacrylamide) (δ=1.093 (6H), 3.823(1H)), thereby confirming the presence of a hydrophilic polymer segment on the surface of the hollow polymer particles.

### Examples 2 to 26

### <Synthesis of Hollow Polymer Particles Composed of Copolymers of Various Water-Soluble Monomers and Water-Insoluble Monomers>

Hollow polymer particles were obtained in the same manner as Example 1 with the exception of changing types and amounts of water-soluble monomer (A), water-insoluble monomer (B), water-soluble polymerization initiator and aqueous solution used in Example 1 to the substances and values shown in Table 1. The physical property values of the resulting polymers are summarized in Table 2. Furthermore, a surfactant in the form of sodium lauryl sulfate was used in Example 6, and was used by adding a prescribed amount to an aqueous solution of NIPAM and uniformly stirring.

[Table 1]

**Table 1 Table of Example Formulations**

| Example | Water-soluble monomer (A)/g | | Water-insoluble monomer (B)/g | | Aqueous solution (ml) | Initiator (g/ml aqueous solution) | | Molar ratio (B/A) | Surfactant |
|---|---|---|---|---|---|---|---|---|---|
| 1 | NIPAM | 1.4 | GMA | 8.52 | 200 | KPS | 0.1/20 | 4.8 | |
| 2 | NIPAM | 1.4 | GMA | 12.44 | 200 | KPS | 0.1/20 | 7.1 | |
| 3 | NIPAM | 1.4 | GMA | 5.11 | 200 | KPS | 0.1/20 | 5.0 | |
| | | | MMA | 2.48 | | | | | |
| 4 | NIPAM | 1.4 | GMA | 3.52 | 100 | KPS | 0.1/20 | 5.0 | |
| | MBAM | 0.19 | MMA | 3.73 | | | | | |
| 5 | NIPAM | 1.4 | GMA | 8.52 | 200 | AIBA | 0.1/20 | 5.0 | |
| 6 | NIPAM | 1.4 | GMA | 8.80 | 200 | KPS | 0.1/20 | 5.0 | Sodium lauryl sulfate 10 mg |
| 7 | NIPAM | 1.4 | OX-MA | 11.4 | 200 | KPS | 0.1/20 | 5.0 | |
| 8 | NIPAM | 1.4 | MMA | 5.0 | 200 | KPS | 0.1/20 | 4.0 | |
| 9 | NIPAM | 1.4 | MMA | 7.5 | 200 | KPS | 0.1/20 | 6.0 | |
| 10 | NIPAM | 1.4 | MMA | 8.7 | 200 | KPS | 0.1/20 | 7.0 | |
| 11 | NIPAM | 1.4 | F-Et-MA | 18.8 | 200 | KPS | 0.1/20 | 9.0 | |
| 12 | DMAA | 0.13 | GMA | 0.89 | 20 | AIBA | 0.01/1 | 4.8 | |
| 13 | DMAA | 0.12 | GMA | 0.88 | 20 | AIBA | 0.01/1 | 5.2 | |
| 14 | ACMO | 0.19 | GMA | 0.90 | 20 | AIBA | 0.01/1 | 4.8 | |
| 15 | ACMO | 0.19 | GMA | 0.88 | 20 | KPS | 0.01/1 | 5.2 | |
| 16 | AA | 0.09 | GMA | 0.90 | 20 | KPS | 0.01/1 | 5.1 | |
| 17 | AA | 0.09 | MMA | 0.63 | 20 | KPS | 0.01/1 | 5 | |
| 18 | MAP-TMAC1 | 0.28 | GMA | 0.90 | 20 | AIBA | 0.01/1 | 4.9 | |
| 19 | ME-SO3Na | 0.26 | GMA | 0.92 | 20 | KPS | 0.01/1 | 5.2 | |
| 20 | St-SO3Na | 0.32 | GMA | 1.0 | 20 | KPS | 0.01/1 | 4.7 | |
| 21 | NIPAM | 0.7 | GMA | 3.7 | 200 | KPS | 0.1/20 | 5.0 | |
| | | | F-Et-MA | 1.0 | | | | | |
| 22 | NIPAM | 0.7 | GMA | 8.8 | 200 | KPS | 0.1/20 | 7.0 | |
| | | | APTEtOSi | 3.6 | | | | | |
| 23 | NIPAM | 0.7 | GMA | 3.5 | 200 | KPS | 0.1/20 | 5.0 | |
| | | | APTEtOSi | 1.8 | | | | | |
| 24 | NIPAM | 0.7 | GMA | 2.7 | 200 | KPS | 0.1/20 | 5.0 | |
| | | | APTEtOSi | 3.6 | | | | | |
| 25 | NIPAM | 0.14 | F-Et-MA | 1.1 | 20 | AIBA | 0.01/1 | 5.4 | |
| | MBAM | 0.02 | | | | | | | |
| 26 | NIPAM | 0.14 | MMA | 0.65 | 20 | AIBA | 0.01/1 | 5.4 | |
| | MBAM | 0.02 | | | | | | | |

| | | | | | | | | | |
|---|---|---|---|---|---|---|---|---|---|
| Legend for Table 1: MBAM: N,N'-methylenebisacrylamide DMAA: N,N-dimethylacrylamide ACMO: Acryloylmorpholine AA: Acrylic acid MAP-TMAC1: 3-(methacryloylamino)propyltrimethyl ammonium chloride ME-SO3Na: Sodium 2-(methacryloyloxy)ethylene sulfonate St-SO3Na: Sodium styrene sulfonate MMA: Methyl methacrylate OX-MA: (3-methyl-3-oxcetanyl) methacrylate F-Et-MA: 2,2,2-trifluoroethyl methacrylate APTEtOSi: Acryloylpropyl triethyoxysilane AIBA: 2,2'-azobis(2-amidinopropane) dihydrochloride | | | | | | | | | |

[Table 2]

**Table 2 Physical Property Values of Hollow Polymer Particles**

| (Examples) | | | | |
|---|---|---|---|---|
| Example | Mean particle diameter (nm)/25°C | Coefficient of variation/ 25°C | Temperature-sensitive layer thickness (nm) | Shell thickness (nm) |
| 1 | 407 | 0.03 | 40 | 10 |
| 2 | 357 | 0.08 | 20 | 10 |
| 3 | 464 | 0.03 | 40 | 10 |
| 4 | 615 | 0.02 | 64 | 10 |
| 5 | 393 | 0.03 | 18 | 10 |
| 6 | 222 | 0.03 | 15 | 10 |
| 7 | 360 | 0.06 | 40 | 10 |
| 8 | 450 | 0.05 | 56 | 10 |
| 9 | 250 | 0.03 | 5 | 10 |
| 10 | 395 | 0.04 | 14 | 15 |
| 11 | 330 | 0.05 | 10 | 15 |
| 12 | 335 | 0.04 | 5 | 10 |
| 13 | 265 | 0.02 | 5 | 10 |
| 14 | 300 | 0.05 | - | 10 |
| 15 | 270 | 0.06 | - | 10 |
| 16 | 350 | 0.04 | - | 10 |
| 17 | 330 | 0.03 | - | 10 |
| 18 | 295 | 0.03 | - | 10 |
| 19 | 140 | 0.03 | - | 5 |
| 20 | 50 | 0.15 | - | 5 |
| 21 | 235 | 0.05 | 15 | 10 |
| 22 | 530 | 0.05 | 10 | 50 |
| 23 | 370 | 0.04 | 18 | 30 |
| 24 | 280 | 0.05 | 17 | 30 |
| 25 | 310 | 0.05 | 15 | 10 |
| 26 | 270 | 0.03 | 10 | 10 |

### Example 27

### <Synthesis of Poly(NIPAM-co-GMA) Hollow Polymer Particles by Two-Stage Addition of Water-Insoluble Monomer>

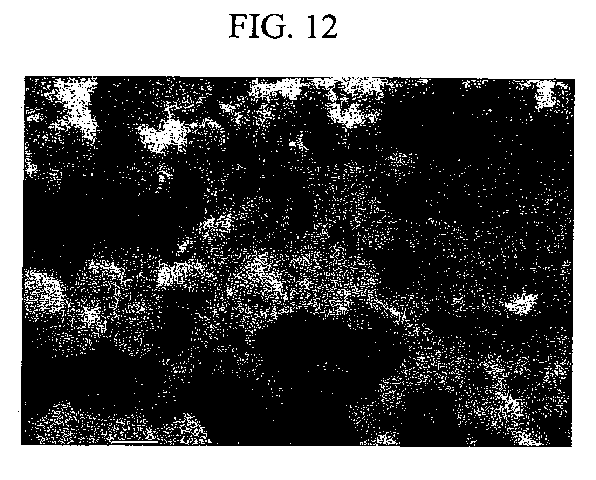

4.5 g of GMA were added to 200 ml of an aqueous solution in which was dissolved 0.7 g of NIPAM followed by heating to 70°C while stirring under nitrogen atmosphere (GNA/NIPAM = 5.1 mol/mol). 20 ml of an aqueous solution in which was dissolved 0.05 g of KPS were then added to this mixture. After stirring for 1 hour at the same temperature, 2.2 g of GMA were added (total GMA/NIPAM = 7.6 mol/mol) followed by stirring for 1 hour at the same temperature to obtain a particle dispersion. After washing this dispersion by centrifugal separation, measurement of the particle diameter of the particles by dynamic light scattering revealed a mono-dispersed particle size distribution, and the mean particle diameter at 25°C was 380 nm with a coefficient of variation of 0.03. Observation of the shape of these particles revealed mono-dispersed spherical particles. When the shape of the particles was observed after crushing the particles, the polymers were confirmed to be hollow polymer particles having a hollow center (Fig. 12).

### Examples 28 to 34

### <Synthesis of Various Types of Hollow Polymer Particles by Two-Stage Addition of a Water-Insoluble Monomer>

Hollow polymer particles were obtained in the same manner as Example 27 with the exception of changing the types and amounts of the water-soluble monomer (A), water-insoluble monomer (B), polymerization initiator and aqueous solution used in Example 27 to each of the substances and values shown in Table 3. The physical property values of the resulting particles are summarized in Table 4.

[Table 3]

**Table 3 Table of Example Formulations**

| Example | Water-soluble monomer (A)/g | | Water-insoluble monomer (B)/g | | Aqueous solution (ml) | Initiator (g/ml aqueous solution) | | Molar ratio (total B/A) |
|---|---|---|---|---|---|---|---|---|
| 27 | NIPAM | 0.7 | GMA (initial) | 4.5 | 200 | KPS | 0.05/20 | 7.6 |
| | | | GMA (added) | 2.2 | | | | |
| 28 | NIPAM | 0.7 | GMA (initial) | 4.4 | 200 | KPS | 0.05/20 | 10.0 |
| | | | GMA (added) | 4.4 | | | | |
| 29 | NIPAM | 0.7 | GMA (initial) | 4.5 | 200 | AIBA | 0.1/20 | 7.6 |
| | | | GMA (added) | 2.2 | | | | |
| 30 | NIPAM | 0.7 | GMA (initial) | 4.4 | 200 | AIBA | 0.1/20 | 10.0 |
| | | | GMA (added) | 4.4 | | | | |
| 31 | NIPAM | 0.7 | GMA (initial) | 5.6 | 200 | KPS | 0.1/20 | 13.0 |
| | | | GMA (added) | 5.5 | | | | |
| 32 | NIPAM | 0.7 | MMA (initial) | 6.0 | 200 | AIBA | 0.1/20 | 13.0 |
| | | | MMA (added) | 5.5 | | | | |
| 33 | NIPAM | 0.7 | GMA (initial) | 4.4 | 200 | AIBA | 0.1/20 | 10.0 |
| | | | MMA (added) | 5.0 | | | | |
| 34 | ACMO | 0.7 | MMA (initial) | 5.0 | 200 | AIBA | 0.1/20 | 10.0 |
| | | | GMA (added) | 4.5 | | | | |

[Table 4]

**Table 4 Physical Property Values of Hollow Polymer Particles (Examples)**

| Example | Mean particle diameter (nm)/25°C | Coefficient of variation/ 25°C | Temperature-sensitive layer thickness (nm) | Shell thickness (nm) |
|---|---|---|---|---|
| 27 | 380 | 0.03 | 6 | 20 |
| 28 | 970 | 0.10 | 10 | 50 |
| 29 | 450 | 0.05 | 10 | 30 |
| 30 | 910 | 0.08 | 10 | 50 |
| 31 | 980 | 0.10 | 5 | 70 |
| 32 | 870 | 0.08 | 5 | 80 |
| 33 | 650 | 0.05 | 10 | 50 |
| 34 | 700 | 0.06 | - | 50 |

### INDUSTRIAL APPLICABILITY

The hollow polymer particles of the present invention can be applied in the fields of aqueous coatings, paints and the like as light scattering improvers and whitening pigments for imparting functions such as luster, opacity or whiteness to paper, fibers, leather and the like by utilizing the characteristic light scattering properties attributable to their internal pores. In addition, the hollow polymer particles of the present invention can also be applied to cosmetics by utilizing the light scattering, moisture absorption and oil absorption properties attributable to their hollow structure, and can also be used as an ink jet receiving layer. In addition, due to their hollow structure, the hollow polymer particles of the present invention can also be applied as heat insulating or soundproofing materials since they are able to inhibit the transmission of heat and sound, and can also be used as weight reduction agents since they are able to reduce weight for an equal volume. Moreover, the hollow polymer particles of the present invention can also be used as chemical substance retention agents capable of containing various chemical substances therein, and can also be used as chemical substance sustained release agents and materials for drug delivery systems (DDS) capable of gradually releasing components contained therein in response to some form of stimulus such as temperature, pressure or pH.
In addition, the hollow polymer particle production process of the present invention does not require complex steps extending over a large number of stages, and uses a conventionally employed radical polymerization system, thereby making it possible to provide hollow polymer particles inexpensively for the various applications described above, while also facilitating structural design corresponding to each type of application, thereby resulting in superior industrial usefulness.

## Claims

1. Hollow polymer particles comprising a shell wall having for a main component thereof a copolymer obtained by polymerizing a monomer group (I) including a radical polymerizable water-soluble monomer (A) and a radical polymerizable water-insoluble monomer (B), wherein
the thickness of the shell wall is 5 to 80 nm,
the molar ratio of (B)/(A) of the radical polymerizable water-insoluble monomer (B) to the radical polymerizable water-soluble monomer (A) is 3.5 to 12,
the radical polymerizable water-soluble monomer (A) is a monomer including at least one type of group selected from the group consisting of an amido group, amino group, carboxyl group and salt thereof, and sulfonic acid group and salt thereof within the structure thereof, and
the radical polymerizable water-insoluble monomer (B) is at least one type selected from the group consisting of acrylates and methacrylates.

2. The hollow polymer particles according to claim 1, wherein
the mean particle diameter is 50 nm to 1 µm, and
the particle size distribution is a mono-distribution.

3. The hollow polymer particles according to claim 2, wherein the mean particle diameter is 50 to less than 300 nm, and the thickness of the shell wall is 5 to 30 nm.

4. The hollow polymer particles according to claim 2, wherein the mean particle diameter is 300 nm to 1 µm, and the thickness of the shell wall is 5 to 80 nm.

5. The hollow polymer particles according to claim 1, wherein the radical polymerizable water-soluble monomer (A) is at least one type selected from the group consisting of N-substituted acrylamides and N,N-di-substituted acrylamides.

6. A hollow polymer particle production process comprising:
radical polymerizing a monomer group (I) including a radical polymerizable water-soluble monomer (A) and a radical polymerizable water-insoluble monomer (B) using a water-soluble polymerization initiator in an aqueous medium to induce molecular self-assembly simultaneous to the polymerization reaction, and
obtaining the hollow polymer particles via spontaneous formation of a hollow structures by polymer organization.

7. The hollow polymer particle production process according to claim 6, wherein the molar ratio of (B)/(A) of the radical polymerizable water-insoluble monomer (B) to the radical polymerizable water-soluble monomer (A) is 3.5 to 12.

8. The hollow polymer particles according to claim 5, wherein
the radical polymerizable water-soluble monomer (A) is N-isopropylacrylamide.

## Patentansprüche

1. Hohle Polymerpartikel, die eine Hüllwand umfassen, die als eine Hauptkomponente davon ein Copolymer, dass durch Polymerisieren einer Monomergruppe (I), die ein radikalisch polymerisierbares wasserlösliches Monomer (A) und ein radikalisch polymerisierbares wasserunlösliches Monomer (B) umfasst, erhalten wird, hat, wobei
die Dicke der Hüllwand 5 bis 80 nm ist,
das molare Verhältnis von (B)/(A) des radikalisch polymerisierbaren wasserunlöslichen Monomers (B) zu dem radikalisch polymerisierbaren wasserlöslichen Monomer (A) 3,5 bis 12 ist,
das radikalisch polymerisierbare wasserlösliche Monomer (A) ein Monomer, das mindestens einen Typ einer Gruppe, ausgewählt aus der Gruppe, bestehend aus einer Amidogruppe, einer Aminogruppe, einer Carboxylgruppe und Salzen davon und einer Sulfonsäuregruppe und Salzen davon, innerhalb der Struktur davon umfasst, ist, und
das radikalisch polymerisierbare wasserunlösliche Monomer (B) mindestens ein Typ, ausgewählt aus der Gruppe, bestehend aus Acrylaten und Methacrylaten, ist.

2. Hohle Polymerpartikel gemäß Anspruch 1, wobei
der durchschnittliche Partikeldurchmesser 50 nm bis 1 µm ist, und
die Partikelgrößenverteilung eine Monoverteilung ist.

3. Hohle Polymerpartikel gemäß Anspruch 2, wobei der durchschnittliche Partikeldurchmesser 50 bis weniger als 300 nm ist und die Dicke der Hüllwand 5 bis 30 nm ist.

4. Hohle Polymerpartikel gemäß Anspruch 2, wobei der durchschnittliche Partikeldurchmesser 300 nm bis 1 µm ist und die Dicke der Hüllwand 5 bis 80 nm ist.

5. Hohle Polymerpartikel gemäß Anspruch 1, wobei das radikalisch polymerisierbare wasserlösliche Monomer (A) mindestens ein Typ, ausgewählt aus der Gruppe, bestehend aus N-substituierten Acrylamiden und N,N-disubstituierten Acrylamiden, ist.

6. Herstellungsverfahren für hohle Polymerpartikel, das umfasst:
radikalisches Polymerisieren einer Monomergruppe (I), die ein radikalisch polymerisierbares wasserlösliches Monomer (A) und ein radikalisch polymerisierbares wasserunlösliches Monomer (B) umfasst, unter Verwendung eines wasserlöslichen Polymerisationsinitiators in einem wässrigen Medium, um molekulare Selbstorganisation gleichzeitig mit der Polymerisationsreaktion zu induzieren, und
Erhalten der hohlen Polymerpartikel durch spontane Bildung einer hohlen Struktur durch Polymerorganisation.

7. Herstellungsverfahren für hohle Polymerpartikel gemäß Anspruch 6, wobei das molare Verhältnis von (B)/(A) des radikalisch polymerisierbaren wasserunlöslichen Monomers (B) zu dem radikalisch polymerisierbaren wasserlöslichen Monomer (A) 3,5 bis 12 ist.

8. Hohle Polymerpartikel gemäß Anspruch 5, wobei das radikalisch polymerisierbare wasserlösliche Monomer (A) N-Isopropylacrylamid ist.

## Revendications

1. Des particules creuses de polymère, comprenant une paroi d'enveloppe ayant pour composant principal de celle-ci un copolymère obtenu par polymérisation d'un groupe de monomère (I) comportant un monomère (A) polymérisable radicalairement soluble dans l'eau et un monomère (B) polymérisable radicalairement insoluble dans l'eau, dans lesquelles
l'épaisseur de la paroi d'enveloppe est de 5 à 80 nm;
le rapport molaire de (B)/(A) du monomère (B) polymérisable radicalairement insoluble dans l'eau au monomère (A) polymérisable radicalairement soluble dans l'eau est de 3,5 à 12,
le monomère (A) polymérisable radicalairement soluble dans l'eau est un monomère comprenant au moins un type de groupe choisi dans le groupe constitué par un groupe amido, un groupe amino, un groupe carboxy et un sel de celui-ci et un groupe acide sulfonique et un sel de celui-ci dans la structure de celui-ci, et
le monomère (B) polymérisable radicalairement insoluble dans l'eau est au moins un type choisi dans le groupe constitué par les acrylates et les méthacrylates.

2. Les particules creuses de polymère selon la revendication 1, dans lesquelles
le diamètre moyen des particules est de 50 nm à 1 µm, et
la distribution de taille des particules est une mono-distribution.

3. Les particules creuses de polymère selon la revendication 2, dans lesquelles le diamètre moyen des particules est de 50 à inférieur à 300 nm et l'épaisseur de la paroi d'enveloppe est de 5 à 30 nm.

4. Les particules creuses de polymère selon la revendication 2, dans lesquelles le diamètre moyen des particules est de 300 nm à 1 µm et l'épaisseur de la paroi d'enveloppe est de 5 à 80 nm.

5. Les particules creuses de polymère selon la revendication 1, dans lesquelles le monomère (A) polymérisable radicalairement soluble dans l'eau est au moins un type choisi dans le groupe constitué par les acrylamides N-substitués et les acrylamides N,N-di-substitués.

6. Procédé de production de particules creuses de polymère, comprenant:
la polymérisation d'un groupe de monomère (I) comportant un monomère (A) polymérisable radicalairement soluble dans l'eau et un monomère (B) polymérisable radicalairement insoluble dans l'eau en utilisant un initiateur de polymérisation soluble dans l'eau dans un milieu aqueux pour induire un auto-assemblage moléculaire simultanément à la réaction de polymérisation, et
l'obtention des particules creuses de polymère par formation spontanée des structures creuses par organisation de polymère.

7. Procédé de production de particules creuses de polymère selon la revendication 6, dans lequel le rapport molaire de (B)/(A) du monomère (B) polymérisable radicalairement insoluble dans l'eau au monomère (A) polymérisable radicalairement soluble dans l'eau est de 3,5 à 12.

8. Les particules creuses de polymère selon la revendication 5, dans lesquelles le monomère (A) polymérisable radicalairement soluble dans l'eau est N-isopropylacrylamide.
